# EUROPEAN PATENT APPLICATION

(11) **EP 3 499 876 A1**
(43) Date of publication of application: **19.06.2019**
(21) Application number: 17839055.5
(22) Date of filing: 15.06.2017
(51) Int. Cl.: H04N 5/66, B60K 35/00, B60R 16/02, G09G 3/20, G02B 27/22

(54) **VEHICULAR DISPLAY CONTROL DEVICE AND VEHICLE DRIVING ASSISTANCE SYSTEM**

(30) Priority: 11.08.2016 JP 2016158319
(71) Applicant: DENSO CORPORATION, Kariya-city, Aichi 448-8661 (JP)
(72) Inventor: NAKANE, Hideyuki, Kariya-city Aichi-pref. 448-8661 (JP)
(74) Representative: Winter, Brandl, Fürniss, Hübner, Röss, Kaiser, Polte - Partnerschaft mbB
(86) International application number: PCT/JP2017/022095
(87) International publication number: WO 2018/029980

(57) **Abstract**

In a vehicle (2) equipped with a head-up display (50) that projects a display image (56) onto a projection member (21) through which a front scenery (8) is transmitted, and displays a virtual image of the display image such that the virtual image is visible by a user, a vehicular display control apparatus controls the display of the virtual image. The vehicular display control apparatus is provided with: an information acquisition unit (S103) that acquires tunnel internal information (li) transmitted from outside the vehicle by wireless communication and indicating the internal condition of a tunnel (7); and an adjustment unit (S105) that adjusts the brightness of the display image according to the tunnel internal information acquired by the information acquisition unit at an entrance adjustment timing (T1) before the entrance (7a) of the tunnel.

## Description

### CROSS REFERENCE TO RELATED APPLICATION

The present application is based on Japanese Patent Application No. 2016-158319 filed on August 11, 2016. The entire disclosures of all of the above application are incorporated herein by reference.

### TECHNICAL FIELD

The present disclosure relates to a vehicular display control apparatus and a vehicle driving assistance system including the same.

### BACKGROUND ART

There has been conventionally known a head-up display (referred to as an HUD) that projects a display image on a projection member that transmits a front scenery in a subject vehicle to virtually display the display image visually recognizably by a user. Such an HUD is widely used, for example, in a vehicle driving assistance system that assists driving of a subject vehicle by a user.

Patent Literature 1 discloses a vehicular display control technique that changes the brightness of a display image on the basis of tunnel information before passage through an entrance or an exit of a tunnel to control virtual image display by an HUD. Positional information and shape information relating to the entrance or the exit of the tunnel are employed as the tunnel information.

### PRIOR ART LITERATURE

### PATENT LITERATURE

Patent Literature 1: JP 2015-127170 A

### SUMMARY OF INVENTION

However, in the technique disclosed in Patent Literature 1, the tunnel information is mere map data which is stored in a navigation apparatus or a server apparatus which is communicable with the subject vehicle. Thus, it is assumed that the tunnel information does not timely and accurately reflect internal and external conditions of the tunnel. A display image which is virtually displayed on the basis of such tunnel information which is neither timely nor accurate may cause reduction in readability by visual recognition (hereinbelow, referred to as "visual recognition readability") against a front scenery serving as a background of the display in the subject vehicle.

It is an object of the present disclosure to provide a vehicular display control apparatus and a vehicle driving assistance system that ensure the visual recognition readability of a virtually displayed display image against a front scenery inside and outside a tunnel, the front scenery serving as a background of the display in a subject vehicle.

A first disclosure of the present disclosure provides a vehicular display control apparatus that, in a subject vehicle equipped with a head-up display that projects a display image on a projection member that transmits a front scenery to virtually display the display image visually recognizably by a user, controls the virtual image display. The vehicular display control apparatus includes an information acquisition unit that acquires tunnel internal information that is transmitted from outside of the subject vehicle by wireless communication and indicates an internal condition of a tunnel, and an adjustment unit that adjusts a brightness of the display image according to the tunnel internal information acquired by the information acquisition unit at an entrance adjustment timing before an entrance of the tunnel.

According to the first disclosure as described above, the brightness of the display image is adjusted according to the tunnel internal information acquired by the information acquisition unit at the entrance adjustment timing before the entrance of the tunnel. The tunnel internal information which indicates an internal condition of the tunnel is transmitted from the outside of the subject vehicle and acquired by wireless communication. Thus, the internal condition immediately before an entry of the subject vehicle into the entrance of the tunnel can be timely and accurately reflected in the tunnel internal information. Thus, the adjustment according to the timely and accurate tunnel internal information makes it possible to virtually display the display image having a brightness that enables visual recognition readability to be ensured against the front scenery serving as a background of the display in the subject vehicle with the entry into the entrance of the tunnel.

A second disclosure of the present disclosure provides a vehicular display control apparatus that, in a subject vehicle equipped with a head-up display that projects a display image on a projection member that transmits a front scenery to virtually display the display image visually recognizably by a user, controls the virtual image display. The vehicular display control apparatus includes an information acquisition unit that acquires tunnel external information that is transmitted from outside of the subject vehicle by wireless communication and indicates an external condition of a tunnel, and an adjustment unit that adjusts a brightness of the display image according to the tunnel external information acquired by the information acquisition unit at an exit adjustment timing before an exit of the tunnel.

According to the second disclosure as described above, the brightness of the display image is adjusted according to the tunnel external information acquired by the information acquisition unit at the exit adjustment timing before the exit of the tunnel. The tunnel external information which indicates an external condition of the tunnel is transmitted from the outside of the subject vehicle and acquired by wireless communication. Thus, the external condition immediately before an exit of the subject vehicle from the exit of the tunnel can be timely and accurately reflected in the tunnel external information. Thus, the adjustment according to the timely and accurate tunnel external information makes it possible to virtually display the display image having a brightness that enables visual recognition readability to be ensured against the front scenery serving as a background of the display in the subject vehicle with the exit of the subject vehicle from the exit of the tunnel.

A third disclosure of the present disclosure provides a vehicular display control apparatus that, in a subject vehicle equipped with a head-up display that projects a display image on a projection member that transmits a front scenery to virtually display the display image visually recognizably by a user, controls the virtual image display. The vehicular display control apparatus includes an information acquisition unit that acquires tunnel internal and external information that is transmitted from outside of the subject vehicle by wireless communication and indicates internal and external conditions of a tunnel, and a limitation unit that limits provision information provided to the user by the display image to tunnel internal information that indicates an internal condition of the tunnel among pieces of the tunnel internal and external information acquired by the information acquisition unit inside the tunnel.

According to the third disclosure as described above, inside the tunnel, the provision information by the display image is limited to the tunnel internal information among pieces of the tunnel internal and external information acquired by the information acquisition unit. The tunnel internal information which indicates an internal condition of the tunnel is transmitted from the outside of the subject vehicle and acquired by wireless communication as the tunnel internal and external information which indicates internal and external conditions of the tunnel. Thus, the internal condition during traveling of the subject vehicle can be timely and accurately reflected in the tunnel internal information. Thus, the timely and accurate limitation of information type makes it possible to limit the amount of provision information to an information amount that enables visual recognition readability to be ensured against the front scenery serving as a background of the display in the subject vehicle and virtually display the display image which represents the provision information during traveling inside the tunnel.

A fourth disclosure of the present disclosure provides a vehicle driving assistance system that assists driving of a subject vehicle. The vehicle driving assistance system includes the vehicular display control apparatus according to any one of the first to third disclosures, and the HUD.

In the fourth disclosure as described above, the visual recognition readability of the display image, which is virtually displayed, can be ensured against the front scenery inside and outside the tunnel, the front scenery serving as a background of the display in the subject vehicle, by the vehicular display control apparatus according to any of the first to third disclosures.

### BRIEF DESCRIPTION OF DRAWINGS

The above and other objects, features, and advantages of the present disclosure will become more apparent from the following detailed description with reference to the accompanying drawings. In the drawings:
FIG. 1 is an interior view illustrating the inside of a cabin of a subject vehicle which is equipped with a vehicle driving assistance system according to an embodiment;
FIG. 2 is a block diagram illustrating the vehicle driving assistance system according to the embodiment;
FIG. 3 is a structural diagram schematically illustrating a detailed configuration of an HUD of FIGs. 1 and 2;
FIG. 4 is a front view illustrating a virtual image display state by the HUD of FIGs. 1 to 3;
FIG. 5 is a front view illustrating a virtual image display state by the HUD of FIGs. 1 to 3;
FIG. 6 is a front view illustrating a virtual image display state by the HUD of FIGs. 1 to 3;
FIG. 7 is a front view illustrating a virtual image display state by the HUD of FIGs. 1 to 3;
FIG. 8 is a flowchart illustrating a display control flow by an HCU of FIG. 2;
FIG. 9 is a schematic diagram for describing the details of processes in S101 and S107 of FIG. 8;
FIG. 10 is a flowchart illustrating a modification of FIG. 8;
FIG. 11 is a flowchart illustrating a modification of FIG. 8;
FIG. 12 is a flowchart illustrating a modification of FIG. 8;
FIG. 13 is a flowchart illustrating a modification of FIG. 8;
FIG. 14 is a flowchart illustrating a modification of FIG. 8;
FIG. 15 is a flowchart illustrating a modification of FIG. 8;
FIG. 16 is a flowchart illustrating a modification of FIG. 8;
FIG. 17 is a flowchart illustrating a modification of FIG. 8; and
FIG. 18 is a front view illustrating a modification of FIG. 5.

### DESCRIPTION OF EMBODIMENTS

Hereinbelow, an embodiment of the present disclosure will be described with reference to the drawings.

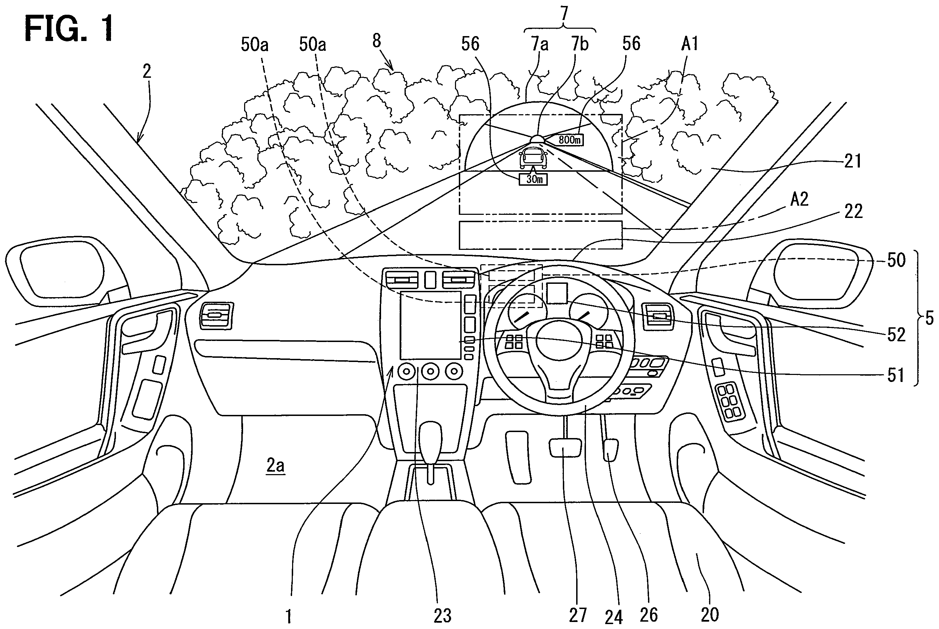

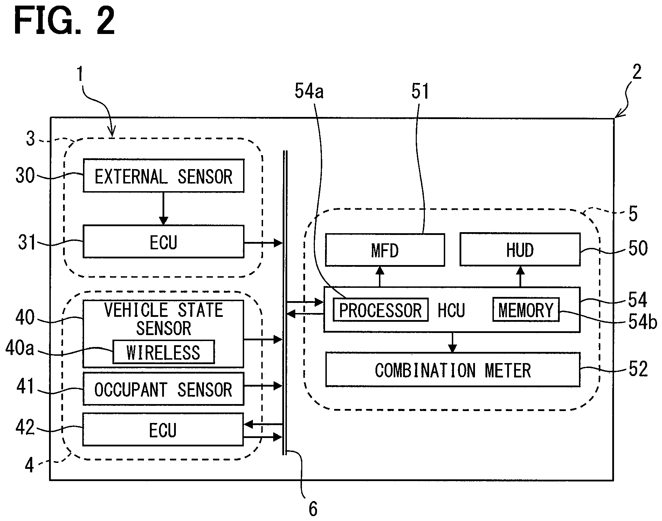

A vehicle driving assistance system 1 of an embodiment to which the present disclosure is applied is mounted on a subject vehicle 2 as illustrated in FIGs. 1 and 2 and, in particular, capable of assisting driving of the subject vehicle 2 when the subject vehicle passes through a tunnel 7.

As illustrated in FIG. 2, the vehicle driving assistance system 1 includes a surroundings monitoring system 3, a vehicle control system 4, and a display system 5. The surroundings monitoring system 3, the vehicle control system 4, and the display system 5 are connected to each other through an in-vehicle network 6 such as a local area network (LAN).

The surroundings monitoring system 3 includes an external sensor 30 and a surroundings monitoring electronic control unit (ECU) 31. The external sensor 30 detects an obstacle which is present outside the subject vehicle 2 and may collide with the subject vehicle 2, such as a different vehicle, an artificial structure, a human, or an animal, and a traffic-related object which is present outside. The external sensor 30 is, for example, one or more of the followings: a sonar; a radar; a light detection and ranging/laser imaging detection and ranging (LIDAR); and a camera.

Specifically, the sonar is an ultrasonic sensor which is installed, for example, in a front part or a rear part of the subject vehicle 2. The sonar receives a reflected wave of an ultrasonic wave transmitted to a detection area outside the subject vehicle 2 to detect an obstacle inside the detection area and outputs a detection signal. The radar is a millimeter wave sensor or a laser sensor which is installed, for example, in the front part or the rear part of the subject vehicle 2. The radar receives a reflected wave of a millimeter wave or a sub-millimeter wave transmitted to the detection area outside the subject vehicle 2 to detect an obstacle inside the detection area and outputs a detection signal. The LIDAR is a laser scanner which is installed, for example, in a roof part of the subject vehicle 2. The LIDAR receives a reflected wave of laser light transmitted to the detection area outside the subject vehicle 2 to detect an obstacle inside the detection area and outputs a detection signal. The camera is a monocular or compound-eye camera which is installed, for example, in a room mirror or a door mirror of the subject vehicle 2. The camera captures an image of the detection area outside the subject vehicle 2 to detect an obstacle and a traffic-related object inside the detection area and outputs an image signal.

The surroundings monitoring ECU 31 is mainly composed of a microcomputer which includes a processor and a memory. The surroundings monitoring ECU 31 is connected to the external sensor 30 and the in-vehicle network 6. The surroundings monitoring ECU 31 acquires obstacle information such as a type of an obstacle (including a vehicle type when the obstacle is a different vehicle) and a relative position of the obstacle with respect to the subject vehicle 2 on the basis of an output signal of the external sensor 30. In addition, the surroundings monitoring ECU 31 acquires sign information such as a speed limit sign and a lane sign, traveling road information such as a white line and a road surface condition, and tunnel information relating to the tunnel 7 on the basis of an output signal of the external sensor 30.

The vehicle control system 4 includes a vehicle state sensor 40, an occupant sensor 41, and a vehicle control ECU 42. The vehicle state sensor 40 is connected to the in-vehicle network 6. The vehicle state sensor 40 detects a traveling state of the subject vehicle 2. The vehicle state sensor 40 is, for example, one or more of the followings: a wireless communication device 40a; a vehicle speed sensor; an engine speed sensor, a steering angle sensor; a fuel sensor; a water temperature sensor; and a global positioning system (GPS) receiver. In the present embodiment, the vehicle state sensor 40 includes at least the wireless communication device 40a.

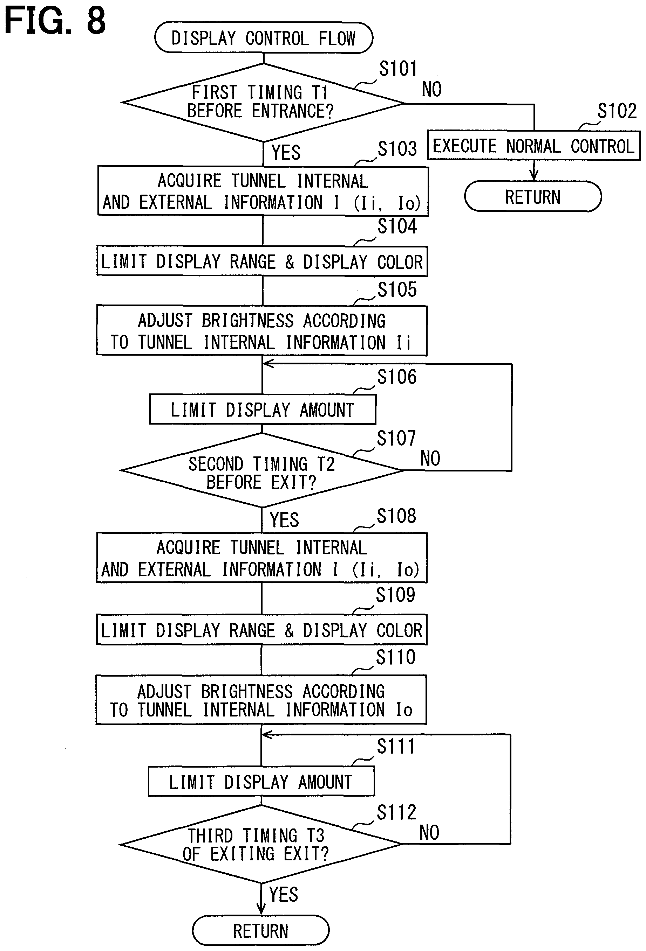

Specifically, the wireless communication device 40a receives an electric wave transmitted by wireless communication from one or more of communication devices outside the subject vehicle 2 such as a different-vehicle transmitter or a portable terminal for vehicle-to-vehicle communication and a road side device for road-to-vehicle communication to generate various types of information indicated by the electric wave. In particular, the wireless communication device 40a of the present embodiment generates tunnel internal information li which indicates an internal condition of the tunnel 7 and tunnel external information lo which indicates external condition of the tunnel 7 as tunnel internal and external information I which indicates internal and external conditions of the tunnel 7 through which the subject vehicle 2 passes (e.g., refer to FIG. 8). As the tunnel internal information li, at least illuminance information, traffic information, traveling road information, and tunnel information are generated. On the other hand, as the tunnel external information lo, at least illuminance information, traffic information, traveling road information, and meteorological information are generated.

The illuminance information is physical information which indicates an external illuminance of the subject vehicle 2. The traffic information is, for example, one or more of the followings: obstacle information such as following distance information between a different vehicle as an obstacle and the subject vehicle 2; and congestion information, disabled vehicle information, accident vehicle information, and fallen object information ahead of the subject vehicle 2. In the present embodiment, the traffic information includes at least the obstacle information. The tunnel information is, for example, one or more of the followings: arrival distance information to an entrance 7a and an exit 7b of the tunnel 7 (e.g., refer to FIGs. 1, 4 to 7, and 9); and structure information of the entrance 7a and the exit 7b, and includes at least the arrival distance information. The traveling road information is, for example, one or more of the followings: road surface information which indicates a road surface condition such as an icy condition; and shape information which indicates a road shape such as a sloping road or a curve. In the present embodiment, the traveling road information includes at least the road surface information. The meteorological information is, for example, two or more of the followings: weather information which indicates a weather condition such as fine weather, rainy weather, cloudy weather, or snowfall; external light information which indicates an external light state such as a solar radiation direction; and temperature information which indicates an outside air temperature of the subject vehicle 2. In the present embodiment, the meteorological information includes at least the weather information and the temperature information.

The vehicle speed sensor detects a vehicle speed of the subject vehicle 2 and outputs a vehicle speed signal corresponding to the detection. The engine speed sensor detects an engine speed of an internal combustion engine in the subject vehicle 2 and outputs an engine speed signal corresponding to the detection. The steering angle sensor detects a steering angle of the subject vehicle 2 and outputs a steering angle signal corresponding to the detection. The fuel sensor detects a remaining amount of fuel in a fuel tank of the subject vehicle 2 and outputs a fuel signal corresponding to the detection. The water temperature sensor detects a cooling water temperature in the internal combustion engine of the subject vehicle 2 and outputs a water temperature signal corresponding to the detection. The GPS receiver receives an electric wave transmitted from a GPS satellite to acquire positional information relating to a traveling position of the subject vehicle 2.

The occupant sensor 41 is connected to the in-vehicle network 6. The occupant sensor 41 detects a state or an operation of a user inside a cabin 2a of the subject vehicle 2 illustrated in FIG. 1. The occupant sensor 41 is, for example, one or more of the followings: a power switch; a user state monitor; a display setting switch; a turn switch; and an automatic control switch. In the present embodiment, the occupant sensor 41 includes at least the power switch.

Specifically, the power switch is operated by the user inside the cabin 2a for starting the internal combustion engine or a motor generator of the subject vehicle 2 to output a power signal corresponding to the operation. The user state monitor captures an image of a user state on a driver's seat 20 inside the cabin 2a using an image sensor to detect the user state and outputs an image signal. The display setting switch is operated by the user for setting a display state inside the cabin 2a to output a display setting signal corresponding to the operation. The turn switch is operated by the user inside the cabin 2a for operating a blinker of the subject vehicle 2 to output a turn signal corresponding to the operation. The automatic control switch is operated by the user inside the cabin 2a for instructing automatic control with respect to a traveling state of the subject vehicle 2 to output an automatic control signal corresponding to the operation.

The vehicle control ECU 42 illustrated in FIG. 2 is mainly composed of a microcomputer which includes a processor and a memory. The vehicle control ECU 42 is connected to the in-vehicle network 6. The vehicle control ECU 42 is one or more of the followings: an engine control ECU; a motor control ECU; a brake control ECU; a steering control ECU; and an integrated control ECU.

Specifically, the engine control ECU controls the operations of a throttle actuator and a fuel injection valve of the internal combustion engine in accordance with an operation of an accelerator pedal 26 inside the cabin 2a illustrated in FIG. 1 or automatically to increase or reduce the vehicle speed of the subject vehicle 2. The motor control ECU controls the operation of the motor generator in accordance with an operation of the accelerator pedal 26 inside the cabin 2a or automatically to increase or reduce the vehicle speed of the subject vehicle 2. The brake control ECU controls the operation of a brake actuator in accordance with an operation of a brake pedal 27 inside the cabin 2a or automatically to increase or reduce the vehicle speed of the subject vehicle 2. The steering control ECU controls the operation of an electric power steering in accordance with an operation of a steering wheel 24 inside the cabin 2a or automatically to adjust the steering angle of the subject vehicle 2. The integrated control ECU synchronously controls the operations of ECUs other than the integrated control ECU in the vehicle control ECU 42 on the basis of, for example, output signals of the sensors 40 and 41, acquired information of the surroundings monitoring ECU 31, and control information of the other ECUs.

As illustrated in FIGs. 1 and 2, the display system 5 is mounted on the subject vehicle 2 for visually presenting information. The display system 5 includes an HUD 50, a multi-function display (MFD) 51, a combination meter 52, and a human machine interface control unit (HCU) 54.

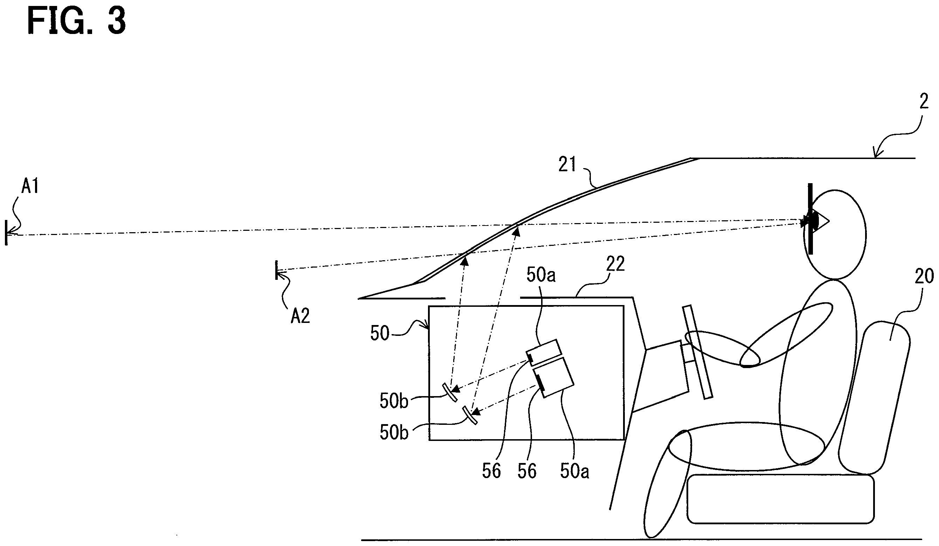

The HUD 50 is installed in an instrument panel 22 inside the cabin 2a illustrated in FIGs. 1 and 3. The HUD 50 forms a display image 56 which represents predetermined information by a projector 50a of a liquid crystal type or a scanning type. The HUD 50 projects the display image 56 formed in this manner on a front windshield 21 as a "projection member" in the subject vehicle 2 through an optical system 50b such as a concave mirror. The front windshield 21 is formed of a light-transmissive glass so as to transmit a front scenery 8 which is present ahead of the subject vehicle 2 outside the cabin 2a. At this time, a beam of the display image 56 reflected by the front windshield 21 and a beam from the front scenery 8 transmitted through the front windshield 21 are perceived by the user on the driver's seat 20. As a result, a virtual image of the display image 56 which is formed at a position ahead of the front windshield 21 is displayed in a superimposed manner on a part of the front scenery 8 as illustrated in FIG. 1, so that the virtual image is visually recognizable by the user on the driver's seat 20.

In the present embodiment, two kinds of areas A1 and A2 are set in a display area as a range in which the display image 56 is virtually displayed. The first display area A1 is set for superimposing the display image 56, which is virtually displayed, in association with a specific object in the front scenery 8. The first display area A1 for the association is adjusted by the HUD 50 so that the display image 56 is formed at a far position which is, for example, approximately 15 m away forward from the subject vehicle 2 in the front scenery 8. The second display area A2 is set for virtually displaying the display image 56 whose association with a specific object in the front scenery 8 is eliminated. The second display area A2 for the elimination of association is adjusted to a smaller size than the first display area A1 below the first display area A1 by the HUD 50 so that the display image 56 is formed at a close distance position which is, for example, approximately 2 m away forward from the subject vehicle 2 in the front scenery 8. That is, the display image 56 virtually displayed in the second display area A2 is formed at the position that is closer to the subject vehicle 2 than the position of the display image 56 in the first display area A1 is.

The projector 50a and the optical system 50b which constitute the HUD 50 may be disposed for each of the display areas A1 and A2 as illustrated in FIG. 3, or either the projector 50a or the optical system 50b may be disposed commonly to the display areas A1 and A2 (not illustrated). Although not illustrated, as long as at least one type of display image 56 is associated with a specific object in the front scenery 8, a display image 56 having no such association may be virtually displayed in the first display area A1. Further, although not illustrated, as long as association of at least one type of display image 56 with a specific object in the front scenery 8 is eliminated, a display image 56 having such association may be virtually displayed in the second display area A2.

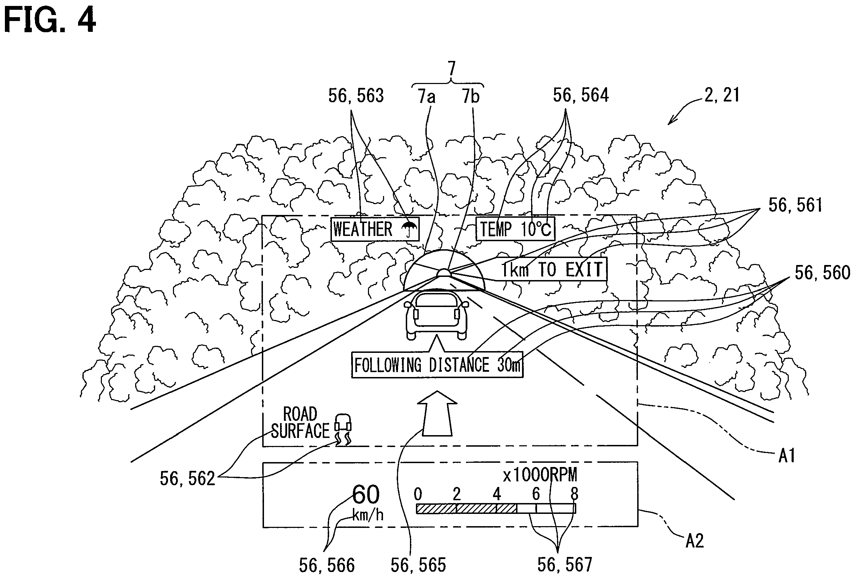

As the display image 56 which is virtually displayed in either the display area A1 or the display area A2 by the HUD 50 in this manner, multiple types of images as illustrated in FIGs. 4 to 7 are prepared for assisting driving of the subject vehicle 2 by the user. Specifically, the multiple types of display images 56 include at least a following distance image 560, an exit distance image 561, a road surface image 562, a weather image 563, a temperature image 564, a navigation image 565, a vehicle speed image 566, and an engine speed image 567.

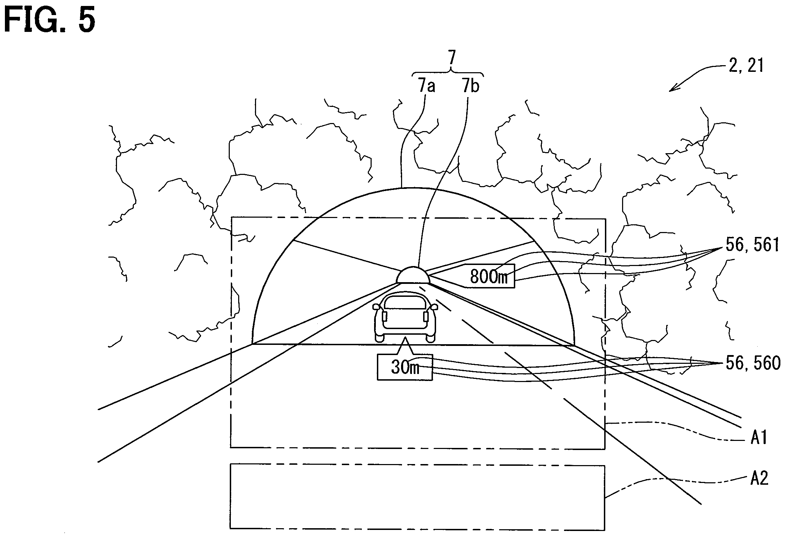

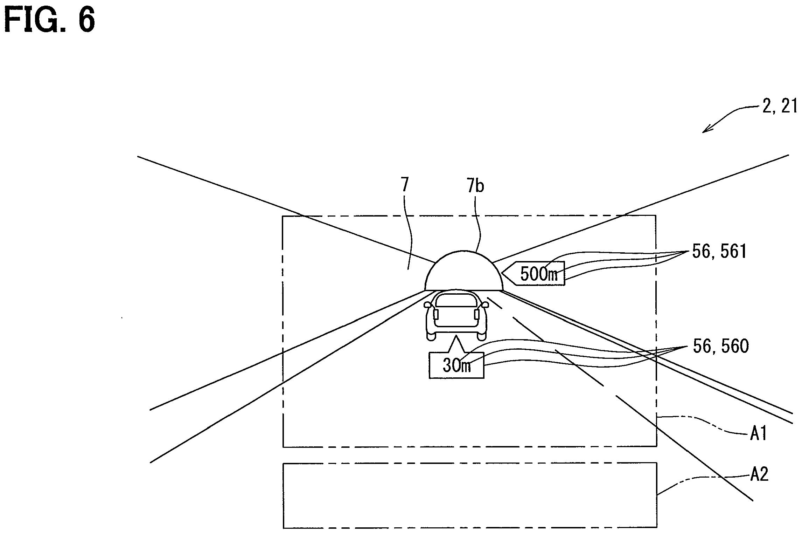

As illustrated in FIGs. 4 to 6, the following distance image 560 is virtually displayed in association with a different vehicle as an obstacle ahead in the first display area A1. The following distance image 560 represents following distance information with the nearest vehicle which travels ahead of the subject vehicle 2 among pieces of the obstacle information as the traffic information. In the following distance image 560, a standard display state as illustrated in FIG. 4 and a simple display state having a limited display amount compared to a display amount in the standard display state as illustrated in FIGs. 5 and 6 are set. The following distance image 560 in the standard display state includes a numeral and a character which indicate a value and a unit of the following distance, respectively, a character which indicates contents meant by the numeral, and a figure which indicates the nearest vehicle which is a target of the numeral. On the other hand, the display amount of the following distance image 560 in the simple display state is reduced by omitting the character indicating the contents.

As illustrated in FIGs. 4 to 6, the exit distance image 561 is virtually displayed in association with the exit 7b of the tunnel 7 in the first display area A1. The exit distance image 561 represents arrival distance information to the nearest exit 7b to which the subject vehicle 2 heads among pieces of the tunnel information. In the exit distance image 561, a standard display state as illustrated in FIG. 4 and a simple display state having a limited display amount compared to a display amount in the standard display state as illustrated in FIGs. 5 and 6 are set. The exit distance image 561 in the standard display state includes a numeral and a character which indicate a value and a unit of the arrival distance, respectively, a character which indicates contents meant by the numeral, a figure which indicates the exit 7b which is a target of the numeral. On the other hand, the display amount of the exit distance image 561 in the simple display state is reduced by omitting the character indicating the contents.

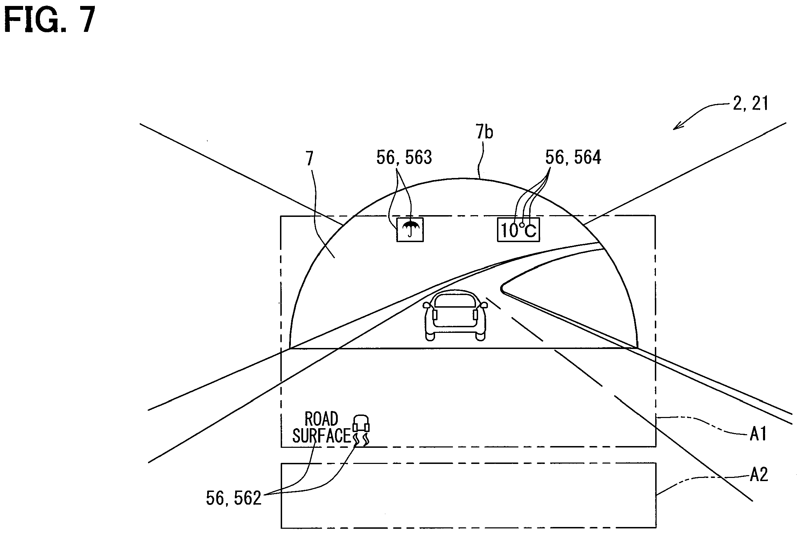

As illustrated in FIGs. 4 and 7, the road surface image 562 is virtually displayed in association with a traveling road ahead of the subject vehicle 2 in the first display area A1. The road surface image 562 represents road surface information relating to the traveling road ahead of the subject vehicle 2 among pieces of the traveling road information. In the road surface image 562, a standard display state as illustrated in FIG. 4 and a simple display state having a limited display amount compared to a display amount in the standard display state as illustrated in FIG. 7 are set. The road surface image 562 in the standard display state includes a figure which schematically indicates a road surface state and a character which indicates contents meant by the figure. On the other hand, the display amount of the road surface image 562 in the simple display state is reduced by omitting the character indicating the contents.

As illustrated in FIGs. 4 and 7, the weather image 563 is virtually displayed in association with a sky area ahead and above the subject vehicle 2 in the first display area A1. The weather image 563 represents weather information relating to a traveling environment of the subject vehicle 2 among pieces of the meteorological information. In the weather image 563, a standard display state as illustrated in FIG. 4 and a simple display state having a limited display amount compared to a display amount in the standard display state as illustrated in FIG. 7 are set. The weather image 563 in the standard display state includes a figure which schematically indicates a weather condition and a character which indicates contents meant by the figure. On the other hand, the display amount of the weather image 563 in the simple display state is reduced by omitting the character indicating the contents.

As illustrated in FIGs. 4 and 7, the temperature image 564 is virtually displayed in association with a sky area ahead and above the subject vehicle 2 in the first display area A1. The temperature image 564 represents temperature information relating to the traveling environment of the subject vehicle 2 among pieces of the meteorological information. In the temperature image 564, a standard display state as illustrated in FIG. 4 and a simple display state having a limited display amount compared to a display amount in the standard display state as illustrated in FIG. 7 are set. The temperature image 564 in the standard display state includes a numeral and a character which indicate a value and a unit of the outside temperature, respectively, and a character which indicates contents meant by the numeral. On the other hand, the display amount of the temperature image 564 in the simple display state is reduced by omitting the character indicating the contents.

As illustrated in FIG. 4, the navigation image 565 is virtually displayed in association with the traveling road ahead of the subject vehicle 2 in the first display area A1. The navigation image 565 represents navigation information for guiding a traveling route of the subject vehicle 2. The navigation image 565 includes at least a figure which indicates a planned traveling route of the subject vehicle 2 among pieces of the navigation information. The navigation information can be acquired in the HCU 54, which is described in detail below, on the basis of map information stored in a memory 54b and an output signal of the vehicle state sensor 40.

As illustrated in FIG. 4, the vehicle speed image 566 is virtually displayed at a fixed position which is not associated with a specific object in the second display area A2. The vehicle speed image 566 represents vehicle speed information based on an output signal of the vehicle speed sensor of the vehicle state sensor 40. The vehicle speed image 566 includes a numeral and a character which indicate a value and a unit of the vehicle speed, respectively.

As illustrated in FIG. 4, the engine speed image 567 is virtually displayed beside the vehicle speed image 566 at a fixed position which is not associated with a specific object in the second display area A2. The engine speed image 567 represents engine speed information based on an output signal of the engine speed sensor of the vehicle state sensor 40. The engine speed image 567 includes a numeral and a character which indicate a value and a unit of the engine speed, respectively.

As the display image 56, for example, an image related to music information or video information provided inside the cabin 2a of the subject vehicle 2 may be employed in addition to the above images 560, 561, 562, 563, 564, 565, 566, and 567. Further, virtual image display can be achieved also by projecting the display image 56 on a light-transmissive combiner which is disposed on the instrument panel 22 to transmit the front scenery 8 in cooperation with the front windshield 21.

The MFD 51 is installed in a center console 23 inside the cabin 2a illustrated in FIG. 1. The MFD 51 displays a real image of an image which is formed to represent predetermined information in one or more liquid crystal panels visually recognizably by the user on the driver's seat 20. As the real image display by the MFD 51, display of an image representing one or more of the followings: the navigation information; the music information; and the video information is employed.

The combination meter 52 is installed in the instrument panel 22 inside the cabin 2a. The combination meter 52 displays vehicle information relating to the subject vehicle 2 visually recognizably by the user on the driver's seat 20. The combination meter 52 is a digital meter which displays vehicle information by an image formed on a liquid crystal panel or an analog meter which displays vehicle information by indicating a scale number by an indicator. As the display by the combination meter 52, for example, display representing one or more of the following pieces of information: the vehicle speed; the engine speed; the fuel remaining amount; the cooling water temperature; and information of the turn switch and the automatic control switch is employed.

As illustrated in FIG. 2, the HCU 54 is mainly composed of a microcomputer which includes a processor 54a and the memory 54b. The HCU 54 is connected to the display elements 50, 51, and 52 of the display system 5 and the in-vehicle network 6. The HCU 54 synchronously controls the operations of the display elements 50, 51, and 52. At this time, the HCU 54 executes the control of these operations in accordance with, for example, acquired information or output signals of the surroundings monitoring ECU 31 and the sensors 40 and 41, control information of the vehicle control ECU 42, stored information of the memory 54b, and acquired information of the HCU 54 itself. Each of the memory 54b of the HCU 54 and memories of the other various ECUs includes one or more storage media such as a semiconductor memory, a magnetic medium, and an optical medium.

The HCU 54 of the present embodiment functions as a "vehicular display control apparatus" so as to read the display image 56 which is stored in the memory 54b as data and virtually display the read display image 56 on the HUD 50. Specifically, the HCU 54 executes a display control program by the processor 54a to functionally implement each step of a display control flow illustrated in FIG. 8. The display control flow is started in response to an ON operation of the power switch as the occupant sensor 41 and ended in response to an OFF operation of the power switch. In the display control flow, "S" refers to each step. An image storage unit which stores the display image 56 which is necessary in the display control flow may be implemented by any of memories of built-in ECUs of the display elements 50, 51, and 52 or cooperation of multiple memories selected from the memories of the built-in ECUs of the display elements 50, 51, and 52 and the memory 54b of the HCU 54.

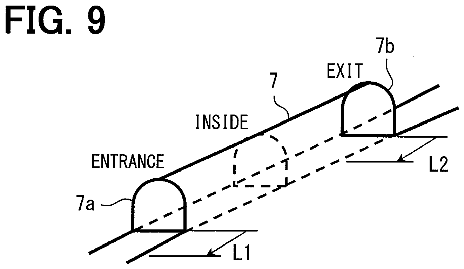

In S101 of the display control flow, it is determined whether the timing of starting the execution of S101 is a first timing T1 when the traveling position of the subject vehicle 2 is before the entrance 7a of the tunnel 7. At this time, as illustrated in FIG. 9, the first timing T1 is adjusted to a timing when the traveling position of the subject vehicle 2 reaches a position before the entrance 7a by a set distance L1. The set distance L1 which defines the first timing T1 is variably set so as to secure the safety of the subject vehicle 2 on the basis of one or more of the followings: the vehicle speed information of the subject vehicle 2; the traffic information; the tunnel information; the traveling road information; and the meteorological information. For example, the set distance L1 is set to 100 m when the subject vehicle 2 travels on an ordinary road where a legally permitted maximum speed is a predetermined speed or set to 200 m when the subject vehicle 2 travels on an expressway where a legally permitted maximum speed is higher than that in the ordinary road.

As illustrated in FIG. 8, when a negative determination is made in S101, the process shifts to S102. Normal control of virtual image display in each of the display areas A1 and A2 is executed in S102, and the process then returns to S101. Specifically, in the normal control, the following distance image 560, the exit distance image 561, the road surface image 562, the weather image 563, the temperature image 564, and the navigation image 565 are virtually displayed as the display image 56 in the first display area A1 as illustrated in FIG. 4. At this time, in the present embodiment, for example, the following distance image 560 and the road surface image 562 are displayed in bright red, the weather image 563 and the temperature image 564 are displayed in bright yellow, and the navigation image 565 are displayed in bright blue. In addition, in the normal control, as illustrated in FIG. 4, the vehicle speed image 566 and the engine speed image 567 are virtually displayed as the display image 56 in the second display area A2. At this time, for example, the vehicle speed image 566 and the engine speed image 567 are displayed in white. The brightness of each of the images 560, 561, 562, 563, 564, 565, 566, and 567 can be adjusted, for example, by RGB gradation values in the projector 50a or light emission luminance values of a light source in the projector 50a. Virtual image display of the exit distance image 561 is started when the subject vehicle 2 passes a traveling position that is away from the entrance 7a of the tunnel 7 by a predetermined distance that is longer than the set distance L1 outside the tunnel 7.

On the other hand, as illustrated in FIG. 8, when an affirmative determination is made in S101, the process shifts to S103. In S103, each piece of information Ii, Io as the tunnel internal and external information I is acquired from the outside through the wireless communication device 40a. At this time, at least illuminance information, traffic information, traveling road information, and tunnel information relating to an internal condition of the tunnel 7 ahead are acquired as the tunnel internal information li. Further, at this time, at least illuminance information, traffic information, traveling road information, and meteorological information relating to an external condition before the tunnel 7 ahead are acquired as the tunnel external information lo.

In the following S104, provision information which is provided to the user inside the tunnel 7 is limited to the tunnel internal information li among pieces of the tunnel internal and external information I acquired in S103. In other words, a display range and a display color are limited. Specifically, the provision information to the user is limited to following distance information and arrival distance information which are represented by the following distance image 560 and the exit distance image 561, respectively, in the first display area A1 as the tunnel internal information li necessary for driving of the subject vehicle 2. Thus, information represented by the road surface image 562, the weather image 563, the temperature image 564, and the navigation image 565 in the first display area A1 and information represented by the vehicle speed image 566 and the engine speed image 567 in the second display area A2 are not provided to the user.

The timing of starting the execution of S104 can be regarded as the first timing T1 before the entrance 7a of the tunnel 7. Thus, the provision information in the first display area A1 is limited to the following distance information and the arrival distance information substantially from the first timing T1 to a second timing T2 (described below), that is, from the position before the entrance 7a outside the tunnel 7 to a position before the exit 7b inside the tunnel 7. The limiting process described above also limits the display range of the display image 56 only to the first display area A1 and limits the display color of the display image 56 to the display color of the following distance image 560 and the exit distance image 561 (e.g., red similar to the color during normal control).

In the following S105, the brightness of the display image 56 which represents the tunnel internal information li limited in S104 is adjusted according to the tunnel internal information li acquired in S103. Specifically, the brightness of the following distance image 560 and the exit distance image 561 which represent the following distance information and the arrival distance information, respectively, as the limited tunnel internal information li is adjusted to a brightness according to illuminance information inside the tunnel 7 ahead among pieces of the tunnel internal information li. At this time, in particular, the brightness of the following distance image 560 and the exit distance image 561 is adjusted to a brightness darker than the brightness in the normal control in S102 according to the illuminance information inside the tunnel 7 ahead. As a result, in the present embodiment, for example, the display color of the following distance image 560 and the exit distance image 561 is set to dark red.

The timing of starting the execution of S105 can be also regarded as the first timing T1 before the entrance 7a of the tunnel 7. Thus, the brightness of the images 560 and 561 displayed in the first display area A1 is adjusted according to the illuminance information substantially from the first timing T1 to the second timing T2 (described below), that is, from the position before the entrance 7a outside the tunnel 7 to the position before the exit 7b inside the tunnel 7. Accordingly, in the present embodiment, the first timing T1 corresponds to an "entrance adjustment timing". The brightness of each of the images 560 and 561 can be adjusted by RGB gradation values in the projector 50a or light emission luminance values of the light source in the projector 50a.

In the following S106, the HUD 50 virtually displays the display image 56 having the information li limited in S104 and the brightness adjusted in S105. Specifically, both of the following distance image 560 and the exit distance image 561 having a reduced brightness compared to the brightness in the normal control in S102 are virtually displayed in a simple display state in the first display area A1 as illustrated in FIGs. 5 and 6. In other words, the display amount is limited. At this time, the virtual image display of the road surface image 562, the weather image 563, the temperature image 564, and the navigation image 565 in the first display area A1 and the virtual image display of the vehicle speed image 566 and the engine speed image 567 in the second display area A2 disappear.

The timing of starting the execution of S106 can be also regarded as the first timing T1 before the entrance 7a of the tunnel 7. Thus, the display amount by the display image 56 in the first display area A1 is limited to a display amount by the images 560 and 561 in the simple display state substantially from the first timing T1 to the second timing T2 (described below), that is, from the position before the entrance 7a outside the tunnel 7 to the position before the exit 7b inside the tunnel 7. FIG. 5 illustrates a display state from the first timing T1 to the timing when the subject vehicle 2 enters the entrance 7a of the tunnel 7 outside the tunnel 7. On the other hand, FIG. 6 illustrates a display state from the timing when the subject vehicle 2 enters the entrance 7a of the tunnel 7 to the second timing T2 inside the tunnel 7. According to the above description, in the present embodiment, the first timing T1 corresponds also to an "entrance limitation timing".

As illustrated in FIG. 8, after the execution of S106 is finished, the process shifts to S107. In S107, it is determined whether the timing of starting the execution of S107 is the second timing T2 when the traveling position of the subject vehicle 2 is before the exit 7b of the tunnel 7. At this time, as illustrated in FIG. 9, the second timing T2 is adjusted to a timing when the traveling position of the subject vehicle 2 reaches a position before the exit 7b by a set distance L2. The set distance L2 which defines the second timing T2 is variably set in a manner similar to the set distance L1. For example, the set distance L2 is set to 100 m when the subject vehicle 2 travels on an ordinary road where a legally permitted maximum speed is a predetermined speed or set to 200 m when the subject vehicle 2 travels on an expressway where a legally permitted maximum speed is higher than that in the ordinary road.

As illustrated in FIG. 8, when a negative determination is made in S107, the process returns to S106 to continue the virtual image display of the display image 56 having the limited information and the adjusted brightness. On the other hand, when an affirmative determination is made in S107, the process shifts to S108 to acquire each piece of information Ii, Io as the tunnel internal and external information I in a manner similar to S103.

In the following S109, provision information which is provided to the user before the exit 7b of the tunnel 7 is limited to the tunnel external information Io among pieces of the tunnel internal and external information I acquired in S108. In other words, the display range and the display color are limited. Specifically, the provision information to the user is limited to road surface information, weather information, and temperature information which are represented by the road surface image 562, the weather image 563, and the temperature image 564, respectively, in the first display area A1 as the tunnel external information Io necessary for driving of the subject vehicle 2. Thus, information represented by the following distance image 560, the exit distance image 561, and the navigation image 565 in the first display area A1 and information represented by the vehicle speed image 566 and the engine speed image 567 in the second display area A2 are not provided to the user.

The timing of starting the execution of S109 can be regarded as the second timing T2 before the exit 7b of the tunnel 7. Thus, the provision information in the first display area A1 is limited to the road surface information, the weather information, and the temperature information substantially from the second timing T2 to a third timing T3 (described below), that is, from the position before the exit 7b inside the tunnel 7 to an exit from the exit 7b. The limiting process described above also limits the display range of the display image 56 only to the first display area A1 and limits the display color of the display image 56 to the display color of the road surface information, the weather information, and the temperature information (e.g., yellow similar to the color during normal control).

In the following S110, the brightness of the display image 56 which represents the tunnel external information Io limited in S109 is adjusted according to the tunnel external information Io acquired in S108. Specifically, the brightness of the road surface image 562, the weather image 563, and the temperature image 564 which represent the road surface information, the weather information, and the temperature information, respectively, as the limited tunnel external information Io is adjusted to a brightness according to illuminance information and meteorological information outside the exit 7b ahead among pieces of the tunnel external information lo. At this time, in particular, the brightness of the road surface image 562, the weather image 563, and the temperature image 564 is adjusted to a brightness higher than the brightness in the adjustment in S105 according to the illuminance information and the meteorological information outside the exit 7b ahead. As a result, in the present embodiment, for example, the display color of the road surface image 562, the weather image 563, and the temperature image 564 is set to bright yellow.

The timing of starting the execution of S110 can be also regarded as the second timing T2 before the exit 7b of the tunnel 7. Thus, the brightness of the images 562, 563, and 564 displayed in the first display area A1 is adjusted according to the illuminance information and the meteorological information substantially from the second timing T2 to the third timing T3 (described below), that is, from the position before the exit 7b inside the tunnel 7 to an exit from the exit 7b. Accordingly, in the present embodiment, the second timing T2 corresponds to an "exit adjustment timing". The brightness of each of the images 562, 563, and 564 can be adjusted by RGB gradation values in the projector 50a or light emission luminance values of the light source in the projector 50a.

In the following S111, the HUD 50 virtually displays the display image 56 having the information Io limited in S109 and the brightness adjusted in S110. Specifically, all of the road surface image 562, the weather image 563, and the temperature image 564 having an increased brightness compared to the brightness in the adjustment in S105 are virtually displayed in a simple display state in the first display area A1 as illustrated in FIG. 7. In other words, the display amount is limited. At this time, the virtual image display of the following distance image 560, the exit distance image 561, and the navigation image 565 in the first display area A1 and the virtual image display of the vehicle speed image 566 and the engine speed image 567 in the second display area A2 disappear.

The timing of starting the execution of S111 can be also regarded as the second timing T2 before the exit 7b of the tunnel 7. Thus, the display amount by the display image 56 in the first display area A1 is limited to a display amount by the images 562, 563, and 564 in the simple display state substantially from the second timing T2 to the third timing T3 (described below), that is, from the position before the exit 7b inside the tunnel 7 to an exit from the exit 7b. According to the above description, in the present embodiment, the second timing T2 corresponds also to an "exit limitation timing".

As illustrated in FIG. 8, after the execution of S111 is finished, the process shifts to S112. In S112, it is determined whether the timing of starting the execution of S112 is the third timing T3 when the subject vehicle 2 makes an exit from the exit 7b of the tunnel 7. As a result, the process returns to S111 when a negative determination is made and, on the other hand, returns to S101 when an affirmative determination is made.

In the HCU 54 which implements the display control flow in this manner, a function part that executes S103 and S108 corresponds to an "information acquisition unit", a function part that executes S105 and S110 corresponds to an "adjustment unit", and a function part that executes S104, S106, S109, and S111 corresponds to a "limitation unit".

As the present embodiment described above, examples of actions and effects achieved by the HCU 54 and the vehicle driving assistance system 1 which includes the HCU 54 will be described below.

First, according to the present embodiment, the brightness of the display image 56 is adjusted according to the tunnel internal information li acquired by the HCU 54 at the first timing T1 before the entrance 7a of the tunnel 7. The tunnel internal information li which indicates an internal condition of the tunnel 7 is transmitted from the outside of the subject vehicle 2 and acquired by wireless communication. Thus, the internal condition immediately before an entry of the subject vehicle 2 into the entrance 7a can be timely and accurately reflected in the tunnel internal information li. Thus, the adjustment according to the timely and accurate tunnel internal information li makes it possible to virtually display the display image 56 having a brightness that enables visual recognition readability to be ensured against the front scenery 8 serving as a background of the display in the subject vehicle 2 with the entry into the entrance 7a.

At the first timing T1 of the present embodiment, the brightness of the display image 56 is adjusted according to the illuminance information inside the tunnel 7 among pieces of the tunnel internal information li acquired by the HCU 54. The illuminance information is transmitted from the outside of the subject vehicle 2 and acquired by wireless communication as the tunnel internal information li which indicates an internal condition of the tunnel 7. Thus, the external illuminance inside the tunnel 7 immediately before an entry into the entrance 7a can be timely and accurately reflected in the illuminance information. Thus, the adjustment according to the timely and accurate illuminance information makes it possible to virtually display the display image 56 having a brightness that enables visual recognition readability to be ensured against the external illuminance inside the tunnel 7 with the entry into the entrance 7a.

Further, at the first timing T1 of the present embodiment, in the first display area A1 in which the display image 56 is associated with a specific object in the front scenery 8 and the second display area A2 in which the association is eliminated, the brightness of the display image 56 in the first display area A1 is adjusted. Accordingly, it is possible to preferentially adjust the brightness of the display image 56 which can be easily closely observed by the user due to the association with the specific object. Thus, the visual recognition readability against the front scenery 8 can be ensured with the entry into the entrance 7a.

Next, according to the present embodiment, the brightness of the display image 56 is adjusted according to the tunnel external information Io acquired by the HCU 54 at the second timing T2 before the exit 7b of the tunnel 7. The tunnel external information Io which indicates an external condition of the tunnel 7 is transmitted from the outside of the subject vehicle 2 and acquired by wireless communication. Thus, the external condition immediately before an exit of the subject vehicle 2 from the exit 7b can be timely and accurately reflected in the tunnel external information lo. Thus, the adjustment according to the timely and accurate tunnel external information Io makes it possible to virtually display the display image 56 having a brightness that enables visual recognition readability to be ensured against the front scenery 8 serving as a background of the display in the subject vehicle 2 with the exit from the exit 7b.

At the second timing T2 of the present embodiment, the brightness of the display image 56 is adjusted according to the illuminance information outside the tunnel 7 among pieces of the tunnel external information Io acquired by the HCU 54. The illuminance information is transmitted from the outside of the subject vehicle 2 and acquired by wireless communication as the tunnel external information Io which indicates an external condition of the tunnel 7. Thus, the external illuminance outside the tunnel 7 immediately before an exit from the exit 7b can be timely and accurately reflected in the illuminance information. Thus, the adjustment according to the timely and accurate illuminance information makes it possible to virtually display the display image 56 having a brightness that enables visual recognition readability to be ensured against the external illuminance outside the tunnel 7 with the exit from the exit 7b.

Further, at the second timing T2 of the present embodiment, the brightness of the display image 56 is adjusted according to the meteorological information outside the tunnel 7 among pieces of the tunnel external information Io acquired by the HCU 54. The meteorological information is transmitted from the outside of the subject vehicle 2 and acquired by wireless communication as the tunnel external information Io which indicates an external condition of the tunnel 7. Thus, a meteorological condition outside the tunnel 7 immediately before an exit from the exit 7b can be timely and accurately reflected in the meteorological information. Thus, the adjustment according to the timely and accurate meteorological information makes it possible to virtually display the display image 56 having a brightness that enables visual recognition readability to be ensured against the meteorological condition outside the tunnel 7 with the exit from the exit 7b.

Further, also at the second timing T2 of the present embodiment, in the first display area A1 in which the display image 56 is associated with a specific object in the front scenery 8 and the second display area A2 in which the association is eliminated, the brightness of the display image 56 in the first display area A1 is adjusted. Accordingly, it is possible to preferentially adjust the brightness of the display image 56 which can be easily closely observed by the user due to the association with the specific object. Thus, the visual recognition readability against the front scenery 8 can be ensured with the exit from the exit 7b.

Inside the tunnel 7 of the present embodiment, the provision information by the display image 56 is limited to the tunnel internal information li among pieces of the tunnel internal and external information I acquired by the HCU 54. The tunnel internal information li which indicates an internal condition of the tunnel 7 is transmitted from the outside of the subject vehicle 2 and acquired by wireless communication as the tunnel internal and external information I which indicates internal and external conditions of the tunnel 7. Thus, the internal condition during traveling of the subject vehicle 2 can be timely and accurately reflected in the tunnel internal information li. Thus, the timely and accurate limitation of information type makes it possible to limit the amount of provision information to an information amount that enables visual recognition readability to be ensured against the front scenery 8 serving as a background of the display in the subject vehicle 2 and virtually display the display image 56 which represents the provision information during traveling inside the tunnel 7.

Inside the tunnel 7 of the present embodiment, the provision information by the display image 56 is limited to the tunnel internal information li necessary for driving of the subject vehicle 2 among pieces of the tunnel internal and external information acquired by the HCU 54. Accordingly, it is possible to provide the tunnel internal information li limited to an information amount necessary for driving of the subject vehicle 2 inside the tunnel 7 where it is hardly acceptable for the user to look aside. Thus, it is possible to ensure the visual recognition readability of the display image 56 against the front scenery 8 while giving the user a sense of security during traveling inside the tunnel 7.

According to the present embodiment, the limitation to the tunnel internal information li is started from the first timing T1 before the entrance 7a of the tunnel 7. Accordingly, the provision information by the display image 56 can be reliably limited to the tunnel internal information li from an entry of the subject vehicle 2 into the entrance 7a inside the tunnel 7. Thus, it is possible to ensure the visual recognition readability against the front scenery 8.

Further, not only the provision information by the display image 56 is limited to the tunnel internal information li, but also the display color of the display image 56 which represents the tunnel internal information li is limited inside the tunnel 7 of the present embodiment. According to the information limitation and the display color limitation, the visual recognition readability which is necessary during traveling inside the tunnel 7 where it is hardly acceptable for the user to look aside can be reliably ensured against the front scenery 8.

In addition, inside the tunnel 7 of the present embodiment, not only the provision information by the display image 56 is limited to the tunnel internal information li, but also the display range of the display image 56 which represents the tunnel internal information li is limited. According to the information limitation and the display range limitation, the visual recognition readability which is necessary during traveling inside the tunnel 7 where it is hardly acceptable for the user to look aside can be reliably ensured against the front scenery 8.

In addition, inside the tunnel 7 of the present embodiment, not only the provision information by the display image 56 is limited to the tunnel internal information li, but also the display amount of the display image 56 which represents the tunnel internal information li is limited. According to the information limitation and the display amount limitation, the visual recognition readability which is necessary during traveling inside the tunnel 7 where it is hardly acceptable for the user to look aside can be reliably ensured against the front scenery 8.

In addition, inside the tunnel 7 of the present embodiment, in the first display area A1 in which the display image 56 is associated with a specific object in the front scenery 8 and the second display area A2 in which the association is eliminated, the provision information in the first display area A1 is limited to the tunnel internal information li. Accordingly, it is possible to preferentially reduce the amount of provision information by the display image 56 which can be easily closely observed by the user due to the association with the specific object. Thus, the visual recognition readability against the front scenery 8 can be ensured during traveling inside the tunnel 7.

In particular, according to the present embodiment, the provision information by the display image 56 is limited to the tunnel external information Io instead of the tunnel internal information li among pieces of the tunnel internal and external information I acquired by the HCU 54 at the second timing T2 before the exit 7b of the tunnel 7. The tunnel external information lo which indicates an external condition of the tunnel 7 is transmitted from the outside of the subject vehicle 2 and acquired by wireless communication as the tunnel internal and external information I which indicates internal and external conditions of the tunnel 7. Thus, the external condition immediately before an exit from the exit 7b can be timely and accurately reflected in the tunnel external information lo. Thus, the timely and accurate limitation of information type makes it possible to limit the amount of provision information to an information amount that enables visual recognition readability to be ensured against the front scenery 8 serving as a background of the display in the subject vehicle 2 and virtually display the display image 56 which represents the provision information with the exit from the exit 7b.

At the second timing T2 of the present embodiment, the provision information by the display image 56 is limited to the tunnel external information lo necessary for driving of the subject vehicle 2 among pieces of the tunnel internal and external information I acquired by the HCU 54. Accordingly, it is possible to provide the tunnel external information lo limited to an information amount necessary for driving of the subject vehicle 2 immediately before an exit from the exit 7b where it is hardly acceptable for the user to look aside. Thus, it is possible to ensure the visual recognition readability of the display image 56 against the front scenery 8 while giving the user a sense of security with the exit from the exit 7b.

Further, at the second timing T2 of the present embodiment, the display color, the display range, and the display amount of the display image 56 which represents the tunnel external information Io are limited in a manner similar to the processes inside the tunnel 7 described above. Thus, the visual recognition readability which is necessary in an exit from the exit 7b where it is hardly acceptable for the user to look aside can be reliably ensured against the front scenery 8.

Further, at the second timing T2 of the present embodiment, in the first display area A1 in which the display image 56 is associated with a specific object in the front scenery 8 and the second display area A2 in which the association is eliminated, the provision information in the first display area A1 is limited to tunnel external information lo. Accordingly, it is possible to preferentially reduce the amount of provision information by the display image 56 which can be easily closely observed by the user due to the association with the specific object. Thus, the visual recognition readability against the front scenery 8 can be ensured with an exit from the exit 7b.

As described above, according to the vehicle driving assistance system 1 which includes the HCU 54 of the present embodiment, it is possible to ensure the visual recognition readability of the display image 56, which is virtually displayed, against the front scenery 8 inside and outside the tunnel 7, the front scenery 8 serving as a background of the display.

### (Other Embodiments)

While the embodiment of the present disclosure has been described above, the present disclosure is not limited to the described embodiment. The present disclosure may be applied to various embodiments within the gist of the present disclosure.

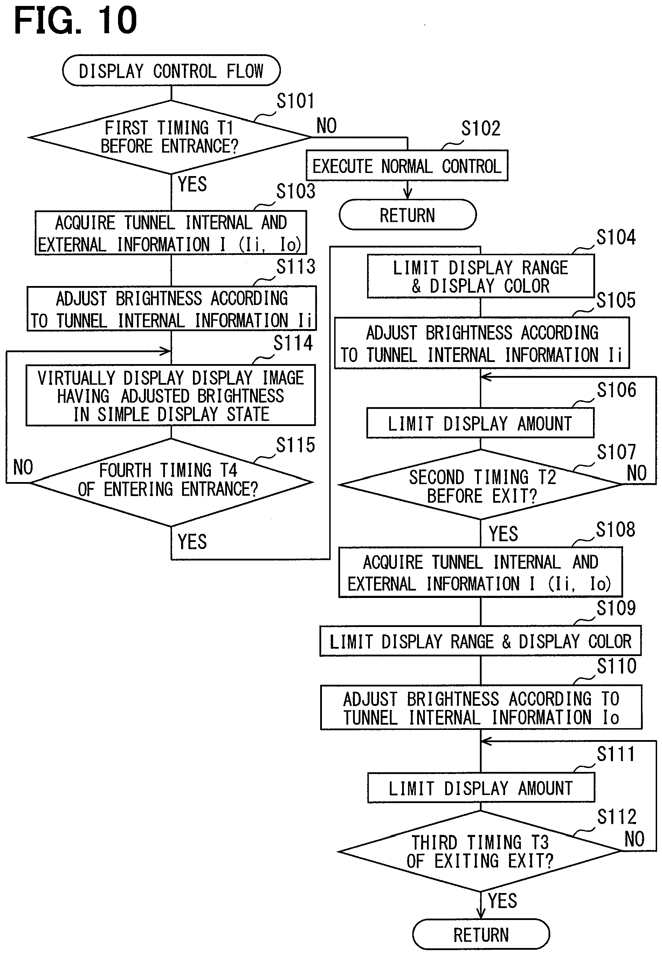

Specifically, as a first modification, as illustrated in FIG. 10, virtual image display similar to the virtual image display in the normal control in S102 may be executed except that the brightness of each of the images 560, 561, 562, 563, 564, 565, 566, and 567 is adjusted in a manner similar to S105 by sequentially shifting to S113 and S114 from S103. In this case, in S115 following S114, it is determined whether the timing of starting the execution of S115 is a fourth timing T4 when the subject vehicle 2 enters the entrance 7a of the tunnel 7. As a result, the process returns to S114 when a negative determination is made and, on the other hand, shifts to S104 when an affirmative determination is made.

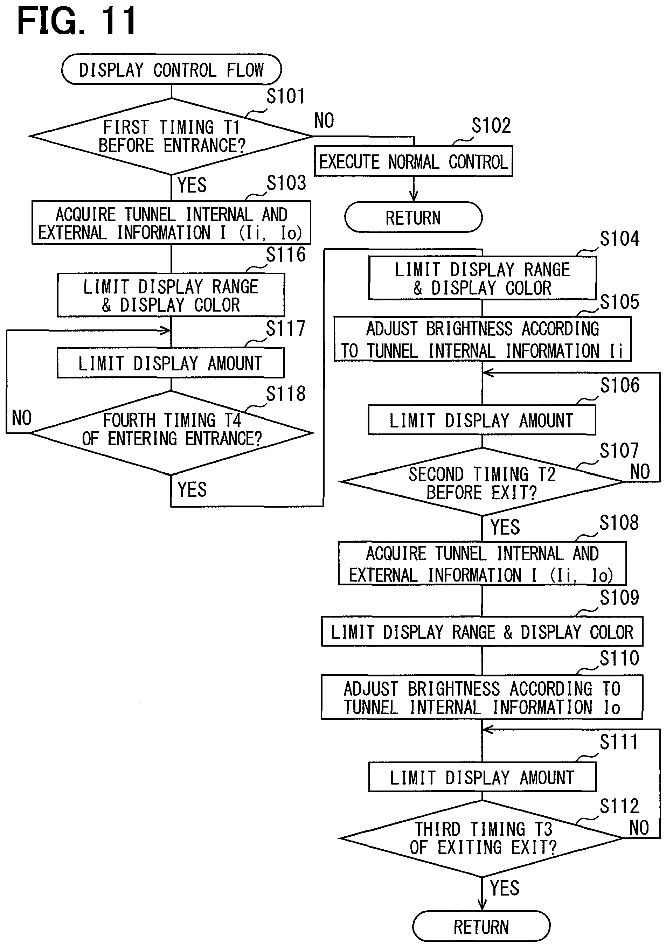

As a second modification, as illustrated in FIG. 11, limitation and virtual image display similar to S104 and S106 may be executed with a brightness similar to the brightness in the normal control in S102 by sequentially shifting to S116 and S117 from S103. In this case, in S118 following S117, it is determined whether the timing of starting the execution of S118 is the fourth timing T4 when the subject vehicle 2 enters the entrance 7a of the tunnel 7. As a result, the process returns to S117 when a negative determination is made and, on the other hand, shifts to S104 when an affirmative determination is made. S116 corresponds to limiting the display range and the display color. S117 corresponds to limiting the display amount.

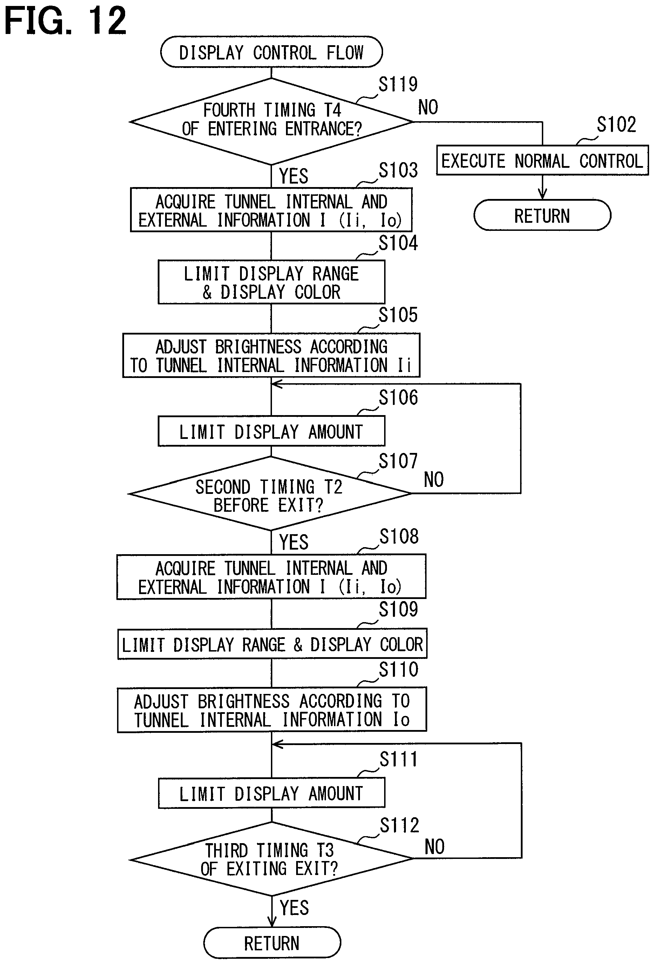

As a third modification, as illustrated in FIG. 12, S119 may be executed instead of S101 to determine whether the timing of starting the execution of S119 is the fourth timing T4 when the subject vehicle 2 enters the entrance 7a of the tunnel 7. As a result, the process shifts to S102 when a negative determination is made and, on the other hand, shifts to S103 when an affirmative determination is made.

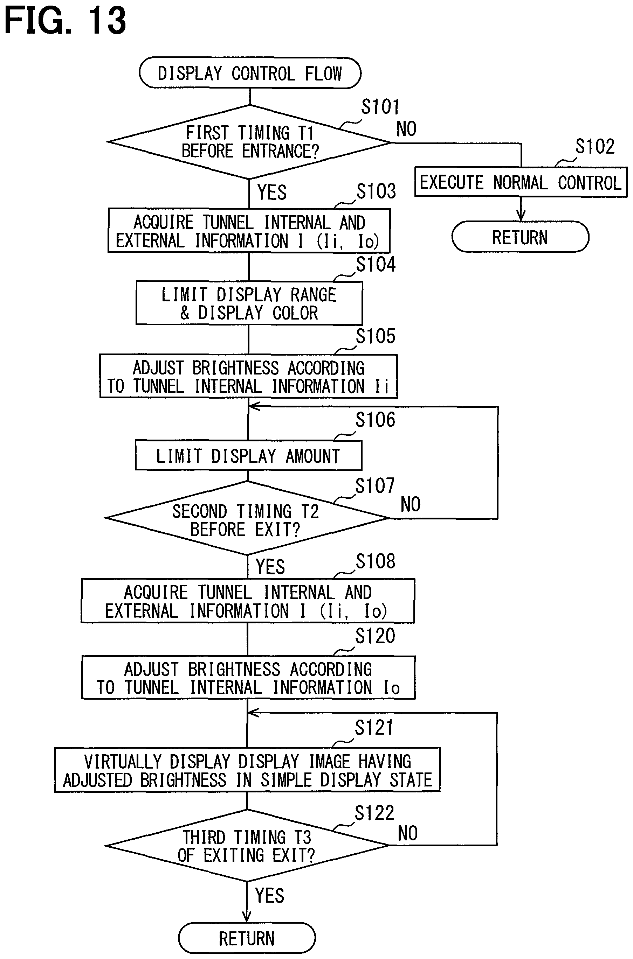

As a fourth modification, as illustrated in FIG. 13, virtual image display similar to the virtual image display in the normal control in S102 may be executed except that the brightness of each of the images 560, 561, 562, 563, 564, 565, 566, and 567 is adjusted in a manner similar to S110 by sequentially shifting to S120 and S121 from S108. In this case, in S122 following S121, it is determined whether the timing of starting the execution of S122 is the third timing T3 when the subject vehicle 2 makes an exit from the exit 7b of the tunnel 7. As a result, the process returns to S121 when a negative determination is made and, on the other hand, returns to S101 when an affirmative determination is made.

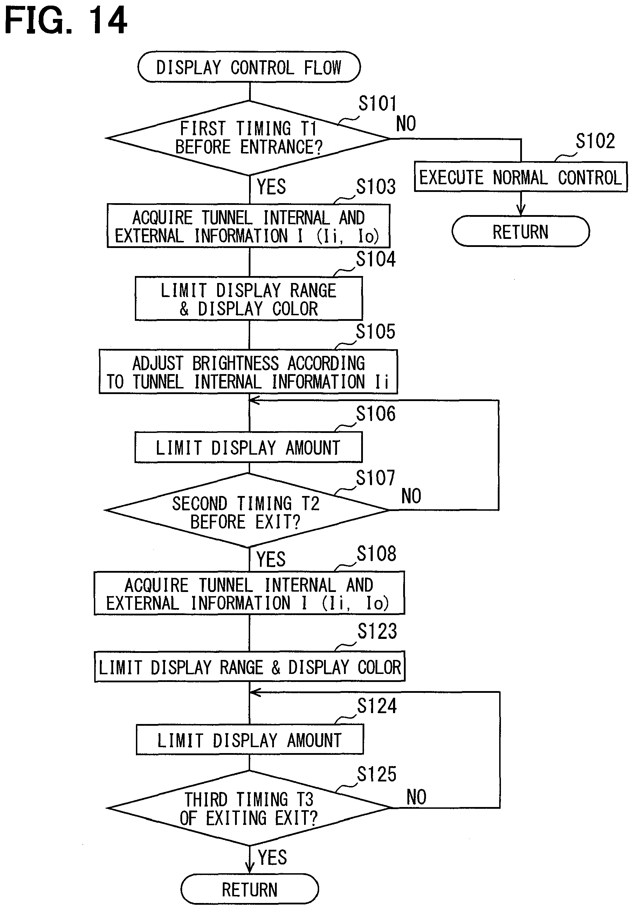

As a fifth modification, as illustrated in FIG. 14, limitation and virtual image display similar to S109 and S111 may be executed with a brightness similar to the brightness in the adjustment in S105 by sequentially shifting to S123 and S124 from S108. In this case, in S125 following S124, it is determined whether the timing of starting the execution of S125 is the third timing T3 when the subject vehicle 2 makes an exit from the exit 7b of the tunnel 7. As a result, the process returns to S124 when a negative determination is made and, on the other hand, returns to S101 when an affirmative determination is made. In other words, S123 corresponds to limiting the display range and the display color, and S124 corresponds to limiting the display amount.

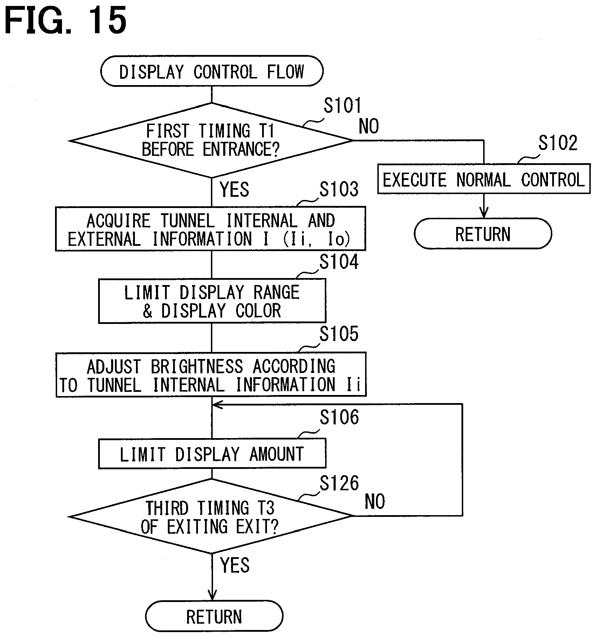

As a sixth modification, as illustrated in FIG. 15, S126 may be executed instead of S107 to determine whether the timing of starting the execution of S126 is the third timing T3 when the subject vehicle 2 makes an exit from the exit 7b of the tunnel 7. As a result, the process returns to S106 when a negative determination is made and, on the other hand, shifts to S101 when an affirmative determination is made.

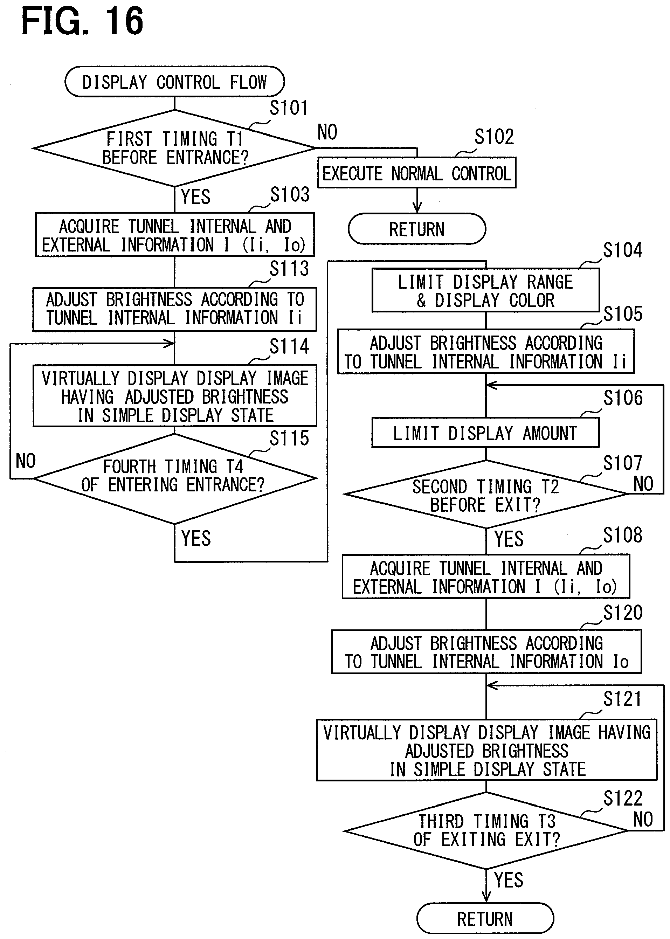

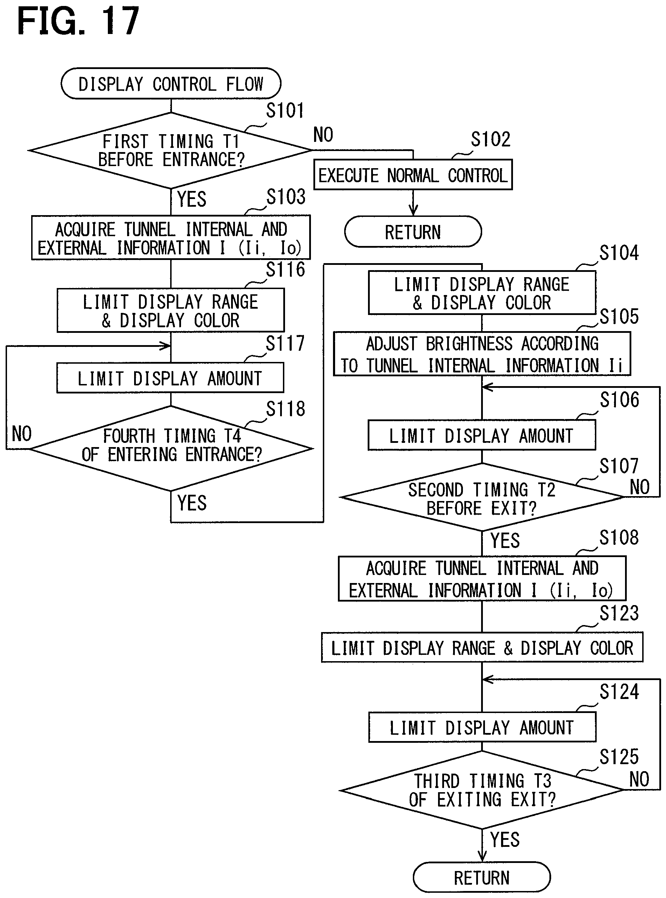

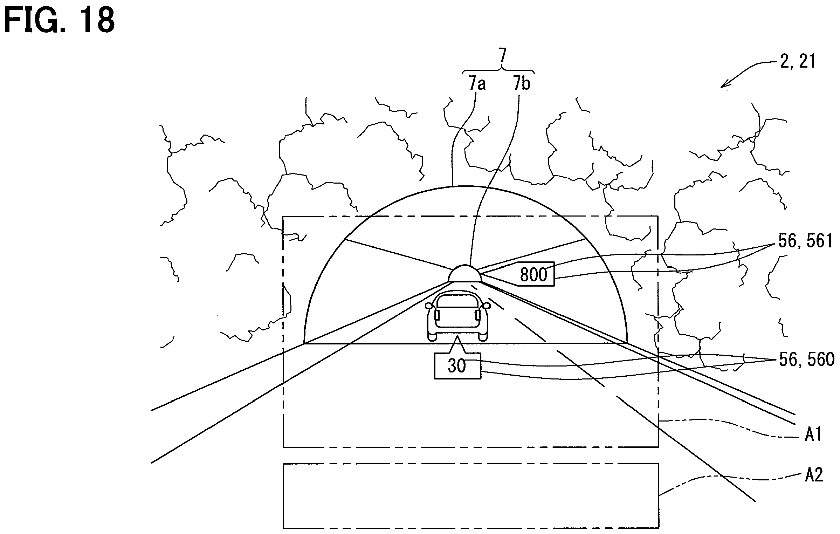

As a seventh modification, any one of the first to third modifications may be combined with any one of the fourth to sixth modifications. FIG. 16 illustrates a seventh modification that combines the first modification with the fourth modification. FIG. 17 illustrates a seventh modification that combines the second modification with the fifth modification. As an eighth modification, as illustrated in FIG. 18, in the images 560, 561, and 564 in a simple display state, a character which indicates a unit in a standard display state may be omitted in addition to or instead of a character which indicates the contents in the standard display state.

As a ninth modification, the brightness adjustment in S105 may be executed according to, for example, traveling road information (specifically, a road surface condition) or external light information (specifically, a solar radiation direction) in addition to or instead of illuminance information. As a tenth modification, the brightness adjustment in S110 may be executed according to, for example, traveling road information (specifically, a road surface condition) or external light information (specifically, a solar radiation direction) in addition to or instead of at least either illuminance information or meteorological information.

Information other than following distance information and arrival distance information, for example, congestion information may be employed as provision information limited in S104 of an eleventh modification as long as the congestion information is tunnel internal information li necessary for driving of the subject vehicle 2. Information other than the road surface information, weather information, and temperature information, for example, following distance information or congestion information may be employed as provision information limited in S109 of a twelfth modification as long as the following distance information or the congestion information is tunnel external information Io necessary for driving of the subject vehicle 2.

Information (e.g., a vehicle type as obstacle information) unnecessary for driving of the subject vehicle 2 may be employed as provision information of a thirteenth modification in addition to or instead of information necessary for the driving as long as the provision information is limited to tunnel internal information li in S104. Information (e.g., a vehicle type as obstacle information) unnecessary for driving of the subject vehicle 2 may be employed as provision information of a fourteenth modification in addition to or instead of information necessary for the driving as long as the provision information is limited to tunnel external information Io in S109. In these thirteenth and fourteenth modifications, the display image 56 which represents the employed provision information is virtually displayed in S106 or S111.

As a fifteenth modification, provision information in each of the display areas A1 and A2 during normal control may not be limited in S104, but may all be employed so that, of the display color and the display range of the display image 56, at least the latter is not limited. As a sixteenth modification, provision information in each of the display areas A1 and A2 during normal control may not be limited in S109, but may all be employed so that, of the display color and the display range of the display image 56, at least the latter is not limited. In these fifteenth and sixteenth modifications, the display image 56 which represents the employed provision information is virtually displayed in S106 or S111.

As a seventeenth modification, not a simple display state, but a standard display state may be employed in S106 so as not to limit the display amount of the display image 56. As an eighteenth modification, not a simple display state, but a standard display state may be employed in S111 so as not to limit the display amount of the display image 56.

As a nineteenth modification, at least one type of provision information in the second display area A2 during normal control may not be limited, but may be employed in S104, and the brightness of the provision information in the second display area A2 may be adjusted in S105 in a manner similar to provision information in the first display area A1. As a twentieth modification, at least one type of provision information in the second display area A2 during normal control may not be limited, but may be employed in S109, and the brightness of the provision information in the second display area A2 may be adjusted in S110 in a manner similar to provision information in the first display area A1. In these nineteenth and twentieth modifications, the display image 56 which represents the employed provision information is virtually displayed in S106 or S111.

As a twenty-first modification, virtual image display of the display image 56 in the second display area A2 may not be employed. As a twenty-second modification, the display image 56 having information and brightness limited and adjusted by the display control flow may be virtually displayed in the second display area A2 instead of the first display area A1. As a twenty-third modification, virtual image display of the display image 56 in the first display area A1 may not be employed further in the twenty-second modification.

As a twenty-fourth modification, at least some of the steps of the display control flow may be implemented as hardware by one or more ICs instead of being functionally implemented by the HCU 54. As a twenty-fifth modification, in addition to or instead of the HCU 54, one or more of the followings: the surroundings monitoring ECU 31; and the display control ECUs of the display elements 50, 51, and 52 may function as the "vehicular display control apparatus".

It is noted that a flowchart or the processing of the flowchart in the present application includes multiple steps (also referred to as sections), each of which is represented, for instance, as S101. Further, each step can be divided into several sub-steps while several steps can be combined into a single step.

While various embodiments, configurations, and aspects of a vehicular display control apparatus and a vehicle driving assistance system including the same according to the present disclosure have been exemplified, the embodiments, configurations, and aspects of the present disclosure are not limited to those described above. For example, embodiments, configurations, and aspects obtained from an appropriate combination of technical elements disclosed in different embodiments, configurations, and aspects are also included within the scope of the embodiments, configurations, and aspects of the present disclosure.

## Claims

1. A vehicular display control apparatus that controls virtual image display in a subject vehicle (2) equipped with a head-up display (50) that projects a display image (56) on a projection member (21) transmitting a front scenery (8) to virtually display the display image visually recognizably by a user, the vehicular display control apparatus comprising:
an information acquisition unit (S103) that acquires a tunnel internal information (li) transmitted from outside of the subject vehicle by wireless communication and indicating an internal condition of a tunnel (7); and
an adjustment unit (S105) that adjusts a brightness of the display image according to the tunnel internal information acquired by the information acquisition unit at an entrance adjustment timing (T1) before an entrance (7a) of the tunnel.

2. The vehicular display control apparatus according to claim 1, wherein:
the information acquisition unit acquires the tunnel internal information including illuminance information inside the tunnel; and
the adjustment unit adjusts the brightness of the display image according to at least the illuminance information among pieces of the tunnel internal information acquired by the information acquisition unit at the entrance adjustment timing.

3. The vehicular display control apparatus according to claim 1 or 2, wherein:
the vehicular display control apparatus (54) controls
virtual image display in a first display area (A1) in which the display image is associated with a specific object in the front scenery and
virtual image display in a second display area (A2) in which association is eliminated; and
the adjustment unit adjusts the brightness of the display image in the first display area at the entrance adjustment timing.

4. The vehicular display control apparatus according to any one of claims 1 to 3, wherein:
the information acquisition unit (S108) acquires a tunnel external information (lo) transmitted from the outside of the subject vehicle by wireless communication and indicating an external condition of the tunnel; and
the adjustment unit (S110) adjusts the brightness of the display image according to the tunnel external information acquired by the information acquisition unit at an exit adjustment timing (T2) before an exit (7b) of the tunnel.

5. A vehicular display control apparatus that controls virtual image display in a subject vehicle (2) equipped with a head-up display (50) that projects a display image (56) on a projection member (21) transmitting a front scenery (8) to virtually display the display image visually recognizably by a user, the vehicular display control apparatus comprising:
an information acquisition unit (S108) that acquires a tunnel external information (lo) transmitted from outside of the subject vehicle by wireless communication and indicating an external condition of a tunnel (7); and
an adjustment unit (S110) that adjusts a brightness of the display image according to the tunnel external information acquired by the information acquisition unit at an exit adjustment timing (T2) before an exit (7b) of the tunnel.

6. The vehicular display control apparatus according to claim 4 or 5, wherein:
the information acquisition unit acquires the tunnel external information including illuminance information outside the tunnel; and
the adjustment unit adjusts the brightness of the display image according to at least the illuminance information among pieces of the tunnel external information acquired by the information acquisition unit at the exit adjustment timing.

7. The vehicular display control apparatus according to any one of claims 4 to 6, wherein:
the information acquisition unit acquires the tunnel external information including meteorological information outside the tunnel; and
the adjustment unit adjusts the brightness of the display image according to at least the metrological information among pieces of the tunnel external information acquired by the information acquisition unit at the exit adjustment timing.

8. The vehicular display control apparatus according to any one of claims 4 to 7, wherein:
the vehicular display control apparatus (54) controls
virtual image display in a first display area (A1) in which the display image is associated with a specific object in the front scenery and
virtual image display in a second display area (A2) in which association is eliminated; and
the adjustment unit adjusts the brightness of the display image in the first display area at the exit adjustment timing.

9. A vehicular display control apparatus that controls virtual image display in a subject vehicle (2) equipped with a head-up display (50) that projects a display image (56) on a projection member (21) transmitting a front scenery (8) to virtually display the display image visually recognizably by a user, the vehicular display control apparatus comprising:
an information acquisition unit (S103) that acquires a tunnel internal and external information (I) transmitted from outside of the subject vehicle by wireless communication and indicating internal and external conditions of a tunnel (7); and
a limitation unit (S104, S106) that limits a provision information provided to the user by the display image to a tunnel internal information (li) indicating an internal condition of the tunnel among pieces of the tunnel internal and external information acquired by the information acquisition unit inside the tunnel.

10. The vehicular display control apparatus according to claim 9, wherein:
the limitation unit limits the provision information inside the tunnel to the tunnel internal information necessary for driving of the subject vehicle.

11. The vehicular display control apparatus according to claim 9 or 10, wherein:
the limitation unit starts a limitation to the tunnel internal information from an entrance limitation timing (T1) before an entrance (7a) of the tunnel.

12. The vehicular display control apparatus according to any one of claims 9 to 11, wherein:
the limitation unit limits a display color of the display image inside the tunnel, the display image representing the tunnel internal information.

13. The vehicular display control apparatus according to any one of claims 9 to 12, wherein:
the limitation unit limits a display range of the display image inside the tunnel, the display image representing the tunnel internal information.

14. The vehicular display control apparatus according to any one of claims 9 to 13, wherein:
the limitation unit limits a display amount of the display image inside the tunnel, the display image representing the tunnel internal information.

15. The vehicular display control apparatus according to any one of claims 9 to 14, wherein:
the vehicular display control apparatus (54) controls
virtual image display in a first display area (A1) in which the display image is associated with a specific object in the front scenery and
virtual image display in a second display area (A2) in which an association with the specific object is eliminated; and
the limitation unit limits the provision information in the first display area to the tunnel internal information inside the tunnel.

16. The vehicular display control apparatus according to any one of claims 9 to 15, wherein:
the limitation unit (S109, S111) limits the provision information to tunnel external information (lo) that indicates an external condition of the tunnel among pieces of the tunnel internal and external information acquired by the information acquisition unit (S108) at an exit limitation timing (T2) before an exit (7b) of the tunnel.

17. The vehicular display control apparatus according to claim 16, wherein:
the limitation unit limits the provision information to the tunnel external information necessary for driving of the subject vehicle by the user at the exit limitation timing.

18. The vehicular display control apparatus according to claim 16 or 17, wherein:
the vehicular display control apparatus controls
virtual image display in a first display area (A1) in which the display image is associated with a specific object in the front scenery and
virtual image display in a second display area (A2) in which an association with the specific object is eliminated; and
the limitation unit limits the provision information in the first display area to the tunnel external information at the exit limitation timing.

19. A vehicle driving assistance system that assists driving of a subject vehicle, the vehicle driving assistance system comprising:
the vehicular display control apparatus (54) according to any one of claims 1 to 18; and
the head-up display (50).
